# EUROPÄISCHE PATENTSCHRIFT

(11) **EP 3 829 947 B1**
(45) Veröffentlichungstag und Bekanntmachung des Hinweises auf die Patenterteilung: **15.03.2023**
(21) Anmeldenummer: 19742718.0
(22) Anmeldetag: 18.07.2019
(51) Int. Cl.: B60T 17/22

(54) **VERFAHREN, VORRICHTUNGEN UND COMPUTERPROGRAMMPRODUKTE EINES GESCHWINDIGKEITSASSISTENZSYSTEMS FÜR FAHRZEUGE**
METHOD DEVICES AND COMPUTER PROGRAM PRODUCT OF A SPEED ASSISTANCE SYSTEM FOR VEHICLES
METHODE APPAREILS ET PRODUIT DE PROGRAMME INFORMATIQUE D'UN SYSTÈME DEREGULATION DEVITESSE

(30) Priorität: 02.08.2018 DE 102018212979
(43) Veröffentlichungstag der Anmeldung: 09.06.2021
(73) Patentinhaber: KNORR-BREMSE Systeme für Schienenfahrzeuge GmbH, 80809 München (DE)
(72) Erfinder: GWILDIES, Martin, 80636 München (DE); SPANG, Andreas, 66540 Neunkirchen (DE); SOMOGYI, Gergo, 1201 Budapest (HU)
(86) Internationale Anmeldenummer: PCT/EP2019/069391
(87) Internationale Veröffentlichungsnummer: WO 2020/025341

(56) Entgegenhaltungen:
- EP-A1- 3 219 576
- WO-A1-2017/195316
- WO-A2-2011/091391
- US-A1- 2012 197 466
- US-A1- 2013 173 083
- US-A1- 2014 180 499
- US-A1- 2014 365 096
- US-A1- 2015 060 608
- US-B1- 7 395 141

## Beschreibung

Die Erfindung betrifft ein Verfahren und eine Vorrichtung eines Geschwindigkeitsassistenzsystems und insbesondere eines Geschwindigkeitsassistenzsystems für Schienenfahrzeuge für Streckenabschnitte mit vorgegebenen Höchstgeschwindigkeiten.

Im Allgemeinen helfen Fahrerassistenzsysteme dem Fahrzeugführer bei der Bewältigung seiner Aufgaben, um die Verkehrssicherheit zu erhöhen. Auf fast allen Strecken im öffentlichen Verkehrsraum, auch im Schienenverkehr, existieren zulässige Höchstgeschwindigkeiten, die zur Unfallvermeidung und Minimierung der Verkehrsgefahr unbedingt eingehalten werden sollten. An dieser Stelle sei angemerkt, dass unter dem Begriff Höchstgeschwindigkeit in dieser Anmeldung stets eine auf einem bestimmten Streckenabschnitt zulässige maximale Geschwindigkeit gemeint ist.

Aufgrund unübersichtlicher Verkehrssituationen oder anderer externer Einflüsse passiert es jedoch, dass der Fahrzeugführer derart abgelenkt wird, dass die zulässige Höchstgeschwindigkeit nicht entsprechend beachtet wird. In der Folge kann es zu Gefahrensituationen für das Fahrzeug und somit für Passagiere, andere Verkehrsteilnehmer und das Fahrzeugumfeld kommen. In vielen Fällen können Unfälle durch starkes Abbremsen verhindert werden, was jedoch in der Regel zumindest als Komforteinschränkung wahrgenommen wird. In anderen Fällen reicht der Bremsweg selbst bei maximaler Verzögerung nicht mehr aus, wodurch es zu Unfällen kommt. Typische Unfalltypen sind dabei Anfahrunfälle, Auffahrunfälle, das Entgleisen bis hin zum Umkippen des Fahrzeugs. Dadurch hervorgerufene Verletzungen von Passagieren oder Passanten sind keine Seltenheit.

Um solchen Unfällen vorzubeugen, gibt es Geschwindigkeitsassistenzsysteme auch für Schienenfahrzeuge. Diese finden bisher allerdings nur im Zusammenhang mit der Einführung des autonomen oder zumindest teilautonomen Fahrens Anwendung.

Das Patentdokument US 2014/0365096 A1 offenbart ein Verfahren zur Steuerung eines Fahrzeugs, welches sich in einem Transportnetz bewegt. Dabei wird das Fahrzeug anhand eines Streckenplans positionsabhängig dynamisch beschleunigt oder gebremst. Patentdokument US 2013/0173083 A1 offenbart ein Verfahren, in dem abhängig von mindestens der Zeit oder der Position eines Fahrzeugs auf einer geplanten Strecke ein Zugriff auf das Energiemanagementsystem des Fahrzeugs erlaubt wird oder nicht.

Es ist vor dem Hintergrund des Stands der Technik Aufgabe der Erfindung ein Verfahren und eine Vorrichtung eines Geschwindigkeitsassistenzsystems bereit zu stellen, das auch für den Einsatz in manuell geführten Fahrzeugen geeignet ist und den Fahrer möglichst genau auf statische oder sich ändernde zulässige Höchstgeschwindigkeiten verschiedener Streckenabschnitte hinweist.

Diese Aufgabe wird mit einem Verfahren und einer Vorrichtung gemäß den unabhängigen Ansprüchen gelöst. Vorteilhafte Weiterbildungen der Erfindung sind Gegenstand der abhängigen Ansprüche

Erfindungsgemäß besteht das Verfahren aus fünf Schritten. Zunächst wird in einer fahrzeugseitigen Vergleichseinheit die aktuelle Geschwindigkeit des Fahrzeugs mit einer in einem Höchstgeschwindigkeitsprofil hinterlegten zulässigen Höchstgeschwindigkeit für den zu diesem Zeitpunkt zu passierenden Streckenabschnitt verglichen. Ist die aktuelle Geschwindigkeit größer als die Höchstgeschwindigkeit, wird dem Fahrzeugführer eine Warnung ausgegeben. Die Informationen über die Position, den Zeitpunkt und die tatsächliche Geschwindigkeit zum Zeitpunkt der Ausgabe der Warnung werden optional zusammen mit der Warnungsmeldung an sich an ein wegseitiges Backoffice übergeben, in dem das Höchstgeschwindigkeitsprofil der Strecke anhand der empfangenen Daten optimiert wird. Im Anschluss daran wird das optimierte Höchstgeschwindigkeitsprofil wieder an die fahrzeugseitige Vergleichseinheit übermittelt und somit die Höchstgeschwindigkeit des Streckenabschnittes angepasst: Bei der nächsten Durchfahrt des gleichen Streckenabschnitts kann dem Fahrzeugführer nun rechtzeitig signalisiert werden die Geschwindigkeit zu verringern oder, dass sich die Höchstgeschwindigkeit im Vergleich zur letzten Durchfahrt verändert beispielsweise verringert hat.

Der Vergleich der aktuellen Geschwindigkeit mit der Höchstgeschwindigkeit für den entsprechenden Streckenabschnitt wird in einer erfindungsgemäßen Vorrichtung durchgeführt, die entweder portabel oder im Fahrzeug festmontiert ausgeführt ist. Die erfindungsgemäße Vorrichtung weist mindestens eine Empfangseinheit, um das optimierte Höchstgeschwindigkeitsprofil vom wegseitigen Backoffice zu empfangen, eine Speichereinheit, um das optimierte Höchstgeschwindigkeitsprofil zu speichern, I einen Prozessor, um den Vergleich der aktuellen Geschwindigkeit mit dem Höchstgeschwindigkeitsprofil durchführen zu können, eine Bedienungseinheit, um die manuelle Bedienung der Vorrichtung durch den Fahrzeugführer zu ermöglichen, und eine Ausgabeeinheit, zur Ausgabe von Warnungen, Handlungsanweisungen und Informationen an den Fahrzeugführer, auf.

Im wegseitigen Backoffice kommt eine Vorrichtung zum Einsatz, die folgende Bauteile aufweist: eine Empfangseinheit, um die fahrzeugseitigen Datensätze aus aktueller Geschwindigkeit und Position des Fahrzeugs mit dem dazugehörigen Zeitstempel zum Zeitpunkt einer Ausgabe einer Warnung zu empfangen, eine Speichereinheit, um die empfangenen Daten zu speichern, einen Prozessor zur Auswertung der Daten und zur Optimierung der Höchstgeschwindigkeitsprofile anhand der Daten und eine Ausgabeeinheit zur Übermittlung der Daten an mindestens ein Fahrzeug sowie eine Bedieneinheit, die eine manuelle Bedienung der Vorrichtung sowie eine manuelle Informationseingabe ermöglicht.

Das System, das zur Durchführung des Verfahrens benötigt wird, besteht mindestens aus diesen beiden Vorrichtungen, kann allerdings auch mehrere fahrzeugseitige Vorrichtungen auf unterschiedlichen Fahrzeugen aufweisen, um mehr Datensätze zu sammeln und damit das Höchstgeschwindigkeitsprofil so aktuell wie möglich zu halten und gleichzeitig das Geschwindigkeitswarnsystem für möglichst viele Fahrzeuge nutzbar zu machen.

In der Praxis wird das Verfahren durch zwei Verfahrensabläufe umgesetzt, wobei ein Ablauf zur fahrzeugseitigen Umsetzung des Vergleichs der beiden Geschwindigkeiten, zur Ausgabe der Warnung und zur Übermittlung der Datensätze an das Backoffice dient, und der andere Ablauf auf der Seite des Backoffice zur Auswertung der Daten sowie zur Übermittlung des optimierten Höchstgeschwindigkeitsprofils an mindestens ein Fahrzeug dient.

In einer vorteilhaften Ausführungsform werden die Warnungen beim Überschreiten der Höchstgeschwindigkeit durch optische, haptische und/oder akustische Signale ausgegeben und können in einer weiteren vorteilhaften Ausführungsform durch den Fahrzeugführer quittiert und damit abgeschaltet werden. Durch das Quittieren des Fahrzeugführers kann dem System bestätigt werden, dass die Warnung vom Fahrzeugführer erkannt wurde.

Des Weiteren erfolgt in einer vorteilhaften Ausführungsform die Ausgabe der Warnung in Stufen, um somit dem Fahrzeugführer zum einen die Möglichkeit zu geben früh genug eingreifen zu können und zum anderen den Fahrzeugführer in letzter Instanz mit einer großen Gewissheit auf die überhöhte Geschwindigkeit aufmerksam zu machen. Außerdem werden unterschiedliche Stufen auch hinsichtlich des Betrags der Geschwindigkeitsüberschreitung implementiert, sodass geringe Überschreitungen eine niederschwelligere Warnstufe auslösen, während starke Geschwindigkeitsüberschreitungen stärkere Warnsignale zur Folge haben.

Zudem wird in einer vorteilhaften Ausführungsform die Warnung anhand von absoluten oder prozentualen Schwellen erzeugt. Im Falle von absoluten Schwellen wird eine Warnung erzeugt, sobald die Fahrzeuggeschwindigkeit um einen absoluten Wert über der zu vergleichende Höchstgeschwindigkeitswert liegt. Bei prozentualen Schwellen wird die Warnung ausgegeben sollte die Fahrzeuggeschwindigkeit über einen bestimmten Prozentsatz der Höchstgeschwindigkeit liegen. Somit kann die Abweichung in Abhängigkeit der Fahrzeuggeschwindigkeit angegeben werden.

In einer weiteren vorteilhaften Ausführungsform wird eine Warnung sowohl dann erzeugt, wenn die tatsächliche Geschwindigkeit die Höchstgeschwindigkeit auf dem entsprechenden Streckenabschnitt überschreitet, als auch vor dem Eintritt in einen Streckenabschnitt in dem eine deutlich niedrigere Höchstgeschwindigkeit vorgegeben ist und zu befürchten ist, dass diese aufgrund der zu schnellen aktuellen Geschwindigkeit des Fahrzeugs nicht erkannt wurde. Diese zweite Form der Warnung hätte somit einen stärkeren prädiktiven Charakter und hilft somit dem Fahrzeugführer vorausschauend das Fahrzeug zu bewegen. Eine Warnung vor jeder Änderung der Höchstgeschwindigkeit entlang einer Strecke unabhängig von der aktuellen Geschwindigkeit sowie eine grundsätzliche Warnung vor identifizierten Gefahrenstellen sind ebenso möglich.

Eine weitere vorteilhafte Ausführungsform der Erfindung weist einen weiteren Verfahrensschritt zur Speicherung der von dem Fahrzeug übermittelten Werte in einer Speichereinheit des wegseitigen Backoffice auf. Durch das Speichern stehen die Fahrzeugdaten auch für spätere Auswertungen und zur Nachverfolgung der Änderungen an dem Höchstgeschwindigkeitsprofil ebenso wie zur Schulung von Fahrzeugführern zur Verfügung.

In einer vorteilhaften Ausführungsform der Erfindung, insbesondere des Verfahrensschrittes der Optimierung der Höchstgeschwindigkeitsprofile, umfasst dieser Verfahrensschritt die Identifikation von Gefahrenbereichen. Dabei werden Bereiche erkannt, in denen beim Übergang von einem Streckenabschnitt mit einer ersten zulässigen Höchstgeschwindigkeit in einen Streckenabschnitt mit einer zweiten niedrigeren zulässigen Höchstgeschwindigkeit diese zweite zulässige Höchstgeschwindigkeit nicht rechtzeitig eingehalten werden kann. Wird dieser Umstand von mehreren hintereinanderfahrenden Fahrzeugen gemeldet, oder kann sichergestellt werden, dass bereits die Information des ersten Fahrzeugs vertrauenswürdig ist, beispielsweise über eine Rückversicherung beim Fahrzeugführer, so kann davon ausgegangen werden, dass in dem Bereich der Geschwindigkeitsübertretung widrige Schienenbedingungen herrschen, die die Bremscharakteristik des Fahrzeugs verschlechtern und damit den Bremsweg verlängern. Somit ist als geeignete Gegenmaßnahme und damit zur Optimierung des Höchstgeschwindigkeitsprofils beispielsweise die Höchstgeschwindigkeit auf diesem Streckenabschnitt zu senken, oder die Geschwindigkeitsbegrenzung bereits früher vorzugeben, damit der Bremsvorgang bereits früher vom Fahrzeugführer eingeleitet werden kann.

Das optimierte Höchstgeschwindigkeitsprofil wird dann in einer vorteilhaften Ausführungsform vom Backoffice direkt an mehrere Fahrzeuge übermittelt, um die sicherheitsrelevanten Informationen möglichst an alle Fahrzeuge zu verteilen. Zusätzlich ist zu erwähnen, dass die jeweils anderen Fahrzeuge ihrerseits ebenso das Backoffice mit ihren Daten speisen und somit ebenso ständig zur Optimierung des Höchstgeschwindigkeitsprofils beitragen.

Im Falle autonom fahrender Fahrzeuge werden in einer vorteilhaften Ausführungsform im Verfahrensschritt der Warnungsausgabe keine Warnungen ausgegeben, sondern ein autonomer Bremseingriff eingeleitet. Auf diese Weise kann das Geschwindigkeitsassistenzsystem ebenfalls auf Fahrzeuge angewendet werden in denen die Führung des Fahrzeugs autonom erfolgt. Im Falle von teilautonom fahrender Fahrzeuge wird in einer vorteilhaften Ausführungsform im Verfahrensschritt der Warnungsausgabe parallel zur Ausgabe der Warnungen ein Bremseingriff eingeleitet.

Zudem erfolgt die Übermittlung des Höchstgeschwindigkeitsprofils an das Fahrzeug in einer vorteilhaften Ausführungsform entweder direkt nach der Erzeugung des optimierten Höchstgeschwindigkeitsprofils oder gemäß einem Zeitplan. Darüber hinaus erfolgt die Kommunikation zwischen Backoffice und Fahrzeug über einen nicht drahtgebundenen Kommunikationskanal.

Der Ablauf sowie die Funktionsweise der Erfindung werden in den Figuren näher beschrieben und erläutert. Sie zeigen:
- **Fig. 1**: zeigt den Grundgedanken der Erfindung anhand einer schematischen Zeichnung.
- **Fig. 2**: beschreibt die Erfindung anhand eines Ablaufdiagrams einer beispielhaften Ausführungsform.
- **Fig. 3**: zeigt schematisch die einzelnen Komponenten der fahrzeugseitigen Vorrichtung

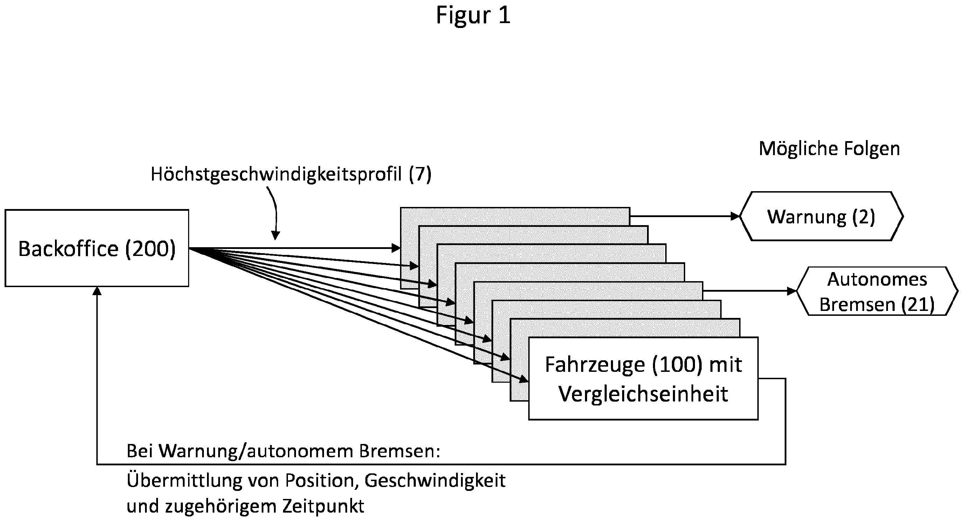

**Fig. 1** zeigt ein Schaubild, das den Grundgedanken der Erfindung darstellt. Die Fahrzeuge 100 mit Vergleichseinheit vergleichen deren aktuelle Geschwindigkeiten vᵢₛₜ mit den jeweiligen Höchstgeschwindigkeiten vₘₐₓ der Streckenabschnitte auf denen sie sich bewegen. Die Höchstgeschwindigkeiten sind in einem Höchstgeschwindigkeitsprofil 7 angelegt. Das Höchstgeschwindigkeitsprofil 7 wird den jeweiligen Fahrzeugen 100 fortlaufend übermittelt.

Als Reaktion auf den Vergleich der aktuellen und der zulässigen maximalen Geschwindigkeit wird im Falle einer größeren Fahrzeuggeschwindigkeit eine Warnung 2 zur Reduzierung der Geschwindigkeit an den Fahrer ausgegeben, oder im Falle autonom fahrender Fahrzeuge ein autonomes Bremsen 21 eingeleitet, oder im Falle eines teilautonomen Fahrens ein Bremsen 21 parallel zur Warnung 2 eingeleitet.

In diesen Fällen werden zudem die aktuellen Fahrzeugdaten aus Geschwindigkeit und Position des Fahrzeugs mit dem dazugehörigen Zeitstempel zurück an das Backoffice 200 übermittelt, wo aufgrund dieser Daten eine Optimierung des Höchstgeschwindigkeitsprofils 7 vorgenommen wird.

Die Optimierung kann dabei derart erfolgen, dass anhand der Tatsache, dass an bestimmten Stellen die Höchstgeschwindigkeiten von den Fahrzeugen nicht eingehalten werden können oder erst zu einem späteren Zeitpunkt erreicht werden, darauf rückgeschlossen werden kann, dass die Bremseigenschaften in diesen Streckenabschnitten nicht ausreichen, um die vorgegebene Höchstgeschwindigkeit einzuhalten. Dies kann auf Verschmutzung der Schienen in Verbindung mit Nässe zurückzuführen sein. Als Reaktion auf die verschlechterte Bremscharakteristik und den längeren Bremsweg können somit die Höchstgeschwindigkeit gesenkt oder der Bereich der Geschwindigkeitsbeschränkung vorgezogen werden. Dies führt zu dem optimierten Höchstgeschwindigkeitsprofil 7'. Dieses wird dann wieder an die Fahrzeuge 100 übermittelt.

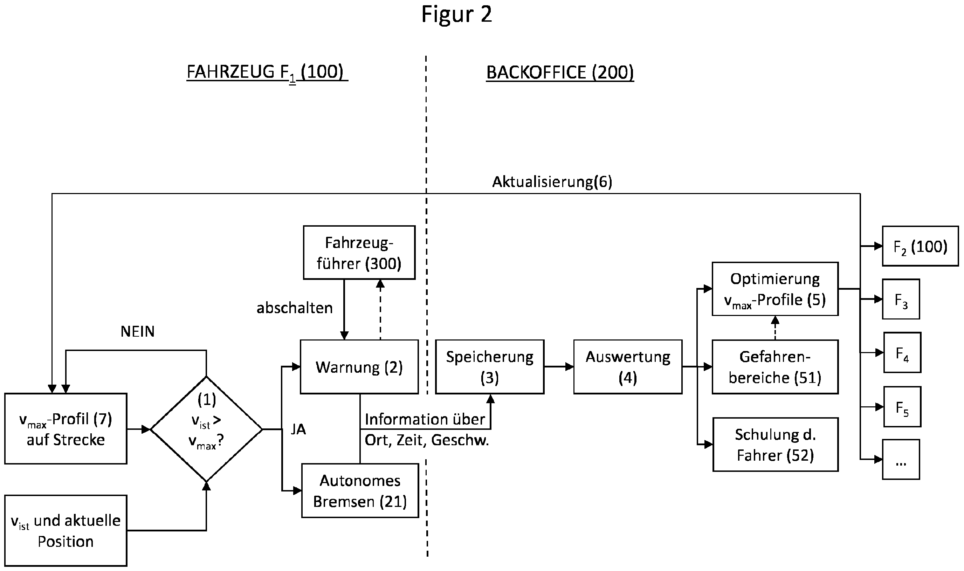

**Fig. 2** zeigt ein schematisches Ablaufdiagramm einer beispielhaften Ausführungsform der Erfindung. In der Vergleichseinheit wird der Vergleich 1 zwischen der aktuellen Geschwindigkeit des Fahrzeugs vᵢₛₜ und der zulässigen Höchstgeschwindigkeit in diesem Streckenabschnitt vₘₐₓ durchgeführt. Dazu werden der Vergleichseinheit die Informationen der aktuellen Geschwindigkeit und der aktuellen Position des Fahrzeugs sowie das zulässige Höchstgeschwindigkeitsprofil auf der Strecke übermittelt. Anhand der aktuellen Position kann der aktuelle Streckenabschnitt im Höchstgeschwindigkeitsprofil identifiziert und somit die zugehörige Höchstgeschwindigkeit zum Vergleich herangezogen werden.

Ist in diesem Vergleich die aktuelle Geschwindigkeit vᵢₛₜ größer als die zulässige Höchstgeschwindigkeit vₘₐₓ, wird eine Warnung 2 an den Fahrer 300 ausgegeben. Diese Warnung 2 kann durch ein haptisches, optisches oder akustisches Signal erfolgen und kann durch den Fahrer 300 manuell abgestellt werden.

Zudem wird die Warnung 2 in unterschiedlichen Stufen in Abhängigkeit des Gefährdungspotenzials ausgegeben. Wird beispielsweise die Höchstgeschwindigkeit deutlich überschritten wird die Warnung direkt in einer höheren Dringlichkeit ausgegeben als bei einer lediglich leichten Überschreitung. Genauso wird bei einer leichten Geschwindigkeitsübertretung zunächst mit geringer Stufe gewarnt und erst wenn der Fahrzeugführer nicht reagiert eine höhere Warnstufe initiiert.

Außerdem kann die Warnung sowohl erst nach Überschreiten der Höchstgeschwindigkeit als auch bereits zuvor ausgegeben werden, wenn das Fahrzeug sich auf einen Streckenabschnitt zu bewegt in dem eine geringere Höchstgeschwindigkeit vₘₐₓ₂ herrscht als die aktuell erlaubte Höchstgeschwindigkeit vₘₐₓ₁. In diesem Fall hat die Warnung prädiktiven Charakter und kann somit dafür sorgen, dass in Abhängigkeit der aktuellen Geschwindigkeit vᵢₛₜ schon eine Warnung ausgegeben wird, wenn die Strecke zur Reduzierung der Geschwindigkeit auf die neue maximal erlaubte Geschwindigkeit vₘₐₓ₂ zu kurz ist.

Des Weiteren kann auf unterschiedliche Methoden der Warnstufengenerierung zurückgegriffen werden. Zum einen können absolute Schwellen zum Vergleich der aktuellen Geschwindigkeit mit der Höchstgeschwindigkeit herangezogen werden. Zum anderen können aber auch prozentuale Schwellenwerte verwendet werden, bei denen die Höchstgeschwindigkeiten um einen bestimmten Prozentsatz überschritten werden müssen um eine Warnung auszulösen. Dieser Prozentsatz kann sich in Abhängigkeit von äußeren, auf die Bremscharakteristik einwirkende Faktoren, wie beispielsweise dem Wetter oder dem Gewicht des Fahrzeuges, verändern. Über diese Methode können also weitere Einflüsse, wie beispielsweise die technisch bedingte Bremskurve auch bei trockenen Bedingungen des entsprechenden Fahrzeuges berücksichtigt werden, um das System weiterhin zu optimieren.

Bei Fahrzeugen, die durch eine autonom agierende Steuerung geführt werden, wird an Stelle der Warnung ein automatisierter Bremseingriff initiiert, um die Geschwindigkeit zu reduzieren.

In dem Fall einer Warnung 2 oder eines automatisierten Bremseingriffes 21 werden die Informationen über die Fahrzeuggeschwindigkeit und die Fahrzeugposition zusammen mit dem dazugehörigen Zeitstempel (Dokumentation des Zeitpunktes) zusammen mit der Warnungsmeldung an sich beziehungsweise mit der Meldung eines autonomen Bremseingriffs an ein wegseitiges Backoffice 200 weitergegeben und dort gespeichert.

Dort findet eine Auswertung 4 der übermittelten Daten statt. Die Auswertung dient in erster Linie zur Optimierung des Höchstgeschwindigkeitsprofils 7. Dazu wird zunächst eine Identifikation der Gefahrenbereiche 51 vorgenommen. Zudem ist mit den gespeicherten Daten und den daraus gewonnenen Erkenntnissen eine Schulung der Fahrzeugführer 52 möglich.

Ebenfalls zur Optimierung der Höchstgeschwindigkeitsprofile 7 können temporär zu beachtende Höchstgeschwindigkeiten für ausgewählte Streckenabschnitte manuell eingespeist werden. Dazu wird der zu editierende Streckenabschnitt mit dem Cursor markiert wodurch sich ein Eingabefenster öffnet und die dazugehörige Höchstgeschwindigkeit auf diesem Streckenabschnitt eingegeben werden kann.

Die optimierten Höchstgeschwindigkeitsprofile 7' werden daraufhin zur Aktualisierung 6 der fahrzeugseitig gespeicherten veralteten Höchstgeschwindigkeitsprofile 7 an alle betroffenen Fahrzeuge übermittelt. Die fahrzeugseitigen Vergleichseinheiten, die den Vergleich 1 zwischen der aktuellen Geschwindigkeit vᵢₛₜ und der zulässigen Höchstgeschwindigkeit vₘₐₓ für den entsprechenden Streckenabschnitt durchführen, erhalten somit stets die aktuellen Höchstgeschwindigkeiten für die jeweiligen Streckenabschnitte.

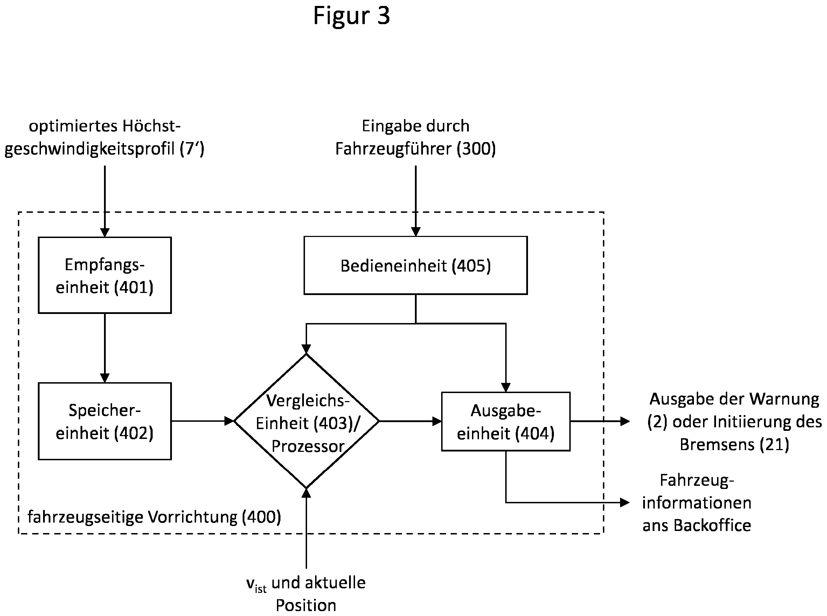

**Fig. 3** zeigt schematisch die einzelnen Komponenten der fahrzeugseitigen Vorrichtung zum Vergleich der aktuellen Geschwindigkeit vᵢₛₜ und der auf dem Streckenabschnitt zulässigen Höchstgeschwindigkeit vₘₐₓ. Wie in den beiden zuvor genannten Figuren bereits beschrieben, wird das optimierte Höchstgeschwindigkeitsprofil 7' an die fahrzeugseitige Vorrichtung 400 kabellos beispielsweise über WLAN oder das Internet übermittelt. Die Daten werden zunächst fahrzeugseitig mittels einer Empfangseinheit 401, die der genutzten Datenübertragungstechnik entspricht, empfangen und daraufhin in einer Speichereinheit 402 gespeichert. Das optimierte Höchstgeschwindigkeitsprofil 7' ersetzt damit das zuvor dort gespeicherte Höchstgeschwindigkeitsprofil 7.

Die Vergleichseinheit 403 erhält die zum Vergleich der Geschwindigkeiten benötigte Höchstgeschwindigkeit auf dem entsprechenden Streckenabschnitt aus dem in der Speichereinheit 402 gespeicherten Höchstgeschwindigkeitsprofil 7'. Zudem erhält sie die aktuelle Geschwindigkeit vᵢₛₜ sowie die aktuelle Position des Fahrzeugs aus den Fahrzeugdaten. Die Position kann dabei beispielsweise über GPS bestimmt werden. Aufgrund der Information über die aktuelle Position kann die zugehörige zulässige Höchstgeschwindigkeit vₘₐₓ aus dem Höchstgeschwindigkeitsprofil 7' ermittelt werden und zum Vergleich mit der aktuellen Geschwindigkeit vᵢₛₜ herangezogen werden. Da zum Vergleich der Geschwindigkeiten Rechenleistung erforderlich ist, ist die Vergleichseinheit 403 als Prozessor zu verstehen.

Ergibt der Vergleich in der Vergleichseinheit 403, dass die aktuelle Geschwindigkeit vᵢₛₜ die zulässige Höchstgeschwindigkeit vₘₐₓ des entsprechenden Streckenabschnittes übersteigt, wird die Information an eine Ausgabeeinheit 404 weitergegeben, in der eine Warnung 2 in Form von optischen, haptischen oder akustischen Signalen oder eine Kombination daraus ausgegeben wird beziehungsweise bei autonomen oder teilautonomen Fahrzeugen ein Bremsen initiiert wird. Die Warnungen können dann entsprechend vom Fahrzeugführer aufgenommen werden und geeignete Maßnahmen eingeleitet werden.

Zudem werden die Fahrzeugdaten bestehend aus der Position und der Geschwindigkeit des Fahrzeugs und einem zugehörigen Zeitstempel zu einem Zeitpunkt einer Ausgabe einer Warnung 2 zusammen mit der Warnungsmeldung an sich an das wegseitige Backoffice übermittelt, um dort die eine Sammlung und Auswertung der Daten vorzunehmen. Um die Übergabe der Daten umsetzen zu können, verfügt die Ausgabeeinheit über eine entsprechende kabellose Datenübertragungstechnik, analog zu der zum Empfang des optimierten Höchstgeschwindigkeitsprofils verwendet wird.

Über die Bedieneinheit 405 ist es dem Fahrzeugführer möglich Einfluss auf die fahrzeugseitige Vorrichtung zu nehmen. Dort können beispielsweise entsprechend der persönlichen Vorlieben des Fahrzeugführers 300 die Anzeige der Warnungen angepasst, die Art des Warnsignals verändert oder sonstige Einstellungen des Verfahrens vorgenommen werden.

In einer Ausführungsform der Erfindung können auch die Ausgabeeinheit 404 und die Bedieneinheit 405 beispielsweise über ein Touchscreendisplay miteinander kombiniert ausgeführt sein.

Des Weiteren kann in einer weiteren Ausführungsform die Übergabe der Daten von der fahrzeugseitigen Vorrichtung an das Backoffice 200 so organisiert werden, dass die Datensätze aus Geschwindigkeit und Position des Fahrzeugs zusammen mit dem dazugehörigen Zeitstempel nicht unmittelbar an das Backoffice 200 übermittelt sondern zunächst in der Speichereinheit 402 der fahrzeugseitigen Vorrichtung 400 gespeichert werden und gesammelt, beispielsweise in einem Bahnhof oder an einer Haltestelle, über Kommunikationsmittel zur Überbrückung kurzer Distanzen, wie beispielsweise WLAN, übergeben werden. Gleiche Möglichkeit besteht ebenso bei der Übermittlung des optimierten Höchstgeschwindigkeitsprofils 7' vom Backoffice 200 an die fahrzeugseitige Vorrichtung 400.

Alternativ dazu kann die Verteilung der notwendigen Informationen auf die Fahrzeuge auch während dem Betrieb des Fahrzeuges erfolgen ohne die Funktionstüchtigkeit des Zuges zu beeinflussen. Im Gegensatz zur oben beschriebenen Möglichkeit ist für diese Ausführungsform allerdings ein Kommunikationsmittel erforderlich, das auch große Distanzen von mehreren Kilometern überbrücken kann.

### BEZUGSZEICHENLISTE

- vᵢₛₜ: aktuelle Geschwindigkeit des Fahrzeugs
- vₘₐₓ: Höchstgeschwindigkeit auf entsprechendem Streckenabschnitt
- 1: Vergleich vᵢₛₜ zu vₘₐₓ
- 2: Warnung
- 21: autonomes Bremsen
- 3: Speicherung
- 4: Auswertung
- 5: Optimierung der Höchstgeschwindigkeitsprofile
- 51: Identifikation der Gefahrenbereiche
- 52: Schulung d. Fahrer
- 6: Aktualisierung
- 7: Höchstgeschwindigkeitsprofil
- 7': optimiertes Höchstgeschwindigkeitsprofil
- 100: Fahrzeug
- 200: Backoffice
- 300: Fahrzeugführer
- 400: fahrzeugseitige Vorrichtung
- 401: Empfangseinheit
- 402: Speichereinheit
- 403: Vergleichseinheit/Prozessor
- 404: Ausgabeeinheit
- 405: Bedieneinheit

## Patentansprüche

1. Verfahren eines Geschwindigkeitsassistenzsystems für ein Fahrzeug (100) aufweisend die folgenden Verfahrensschritte:
(A) Vergleich einer aktuellen Geschwindigkeit (vᵢₛₜ) des Fahrzeugs (100) mit der in einem Höchstgeschwindigkeitsprofil hinterlegten Höchstgeschwindigkeit (vₘₐₓ) in einer fahrzeugseitigen Vorrichtung,
(B) Ausgabe einer Warnung (2) an einen Fahrzeugführer (300), falls die aktuelle Geschwindigkeit (vᵢₛₜ) des Fahrzeugs (100) größer ist als die Höchstgeschwindigkeit (vₘₐₓ) eines Streckenabschnitts,
(C) Übermitteln von Position und Geschwindigkeit des Fahrzeugs (100) sowie des dazugehörigen Zeitstempels zu einem Zeitpunkt der Warnung (2) an ein Backoffice (200),
(D) Optimierung des Höchstgeschwindigkeitsprofils (7) anhand der empfangenen Daten,
(E) Übermittlung des optimierten Höchstgeschwindigkeitsprofils (7') an die fahrzeugseitige Vorrichtung.

2. Verfahren gemäß Anspruch 1, wobei die Ausgabe der Warnung (2) im Verfahrensschritt (B) durch optische, haptische und/oder akustische Signale erfolgt.

3. Verfahren gemäß einem der vorhergehenden Ansprüche, wobei die ausgegebene Warnung (2) in Verfahrensschritt (B) durch den Fahrzeugführer (300) deaktiviert werden kann.

4. Verfahren gemäß einem der vorhergehenden Ansprüche, wobei die Ausgabe der Warnung (2) in Verfahrensschritt (B) in Stufen erfolgt.

5. Verfahren gemäß einem der vorhergehenden Ansprüche, wobei die Warnung (2) anhand von absoluten Schwellen und/oder prozentualer Schwellen und/oder unter Einbeziehung einer Bremskurvencharakteristik erzeugt wird.

6. Verfahren gemäß einem der vorhergehenden Ansprüche, wobei die Ausgabe der Warnung (2) bei Überschreitung der vorgegebenen zulässigen Höchstgeschwindigkeit (vₘₐₓ) oder prädiktiv vor Gefahrenstellen ausgegeben wird.

7. Verfahren gemäß einem der vorhergehenden Ansprüche, wobei das Verfahren um einen Verfahrensschritt zur langfristigen Speicherung (3) der von dem Fahrzeug (100) übermittelten Werte in einer Speichereinheit des wegseitigen Backoffice (200) erweitert wird.

8. Verfahren gemäß einem der vorhergehenden Ansprüche, wobei der Verfahrensschritt (D) der Optimierung der Höchstgeschwindigkeitsprofile (7) eine Identifikation der Gefahrenbereiche aufweist.

9. Verfahren gemäß einem der vorhergehenden Ansprüche, wobei das optimierte Höchstgeschwindigkeitsprofil (7') an mehrere, insbesondere nachfolgende, Fahrzeuge übermittelt wird.

10. Verfahren gemäß einem der vorhergehenden Ansprüche, wobei im Falle autonom fahrender Fahrzeuge die Ausgabe der Warnung (2) in Verfahrensschritt (B) durch das Einleiten eines autonomen Bremseingriffes (21) ersetzt wird oder im Falle von teilautonom fahrenden Fahrzeugen das Einleiten eines autonomen Bremseingriffes (21) zusätzlich zur Ausgabe der Warnung (2) an den Fahrzeugführer (300) erfolgt.

11. Verfahren gemäß einem der vorhergehenden Ansprüche, wobei die Übermittlung des optimierten Höchstgeschwindigkeitsprofils (7') gemäß Verfahrensschritt (E) an das Fahrzeug (100) entweder direkt nach der Erzeugung des optimierten Höchstgeschwindigkeitsprofils (7') oder gemäß einem Zeitplan oder ortsgebunden erfolgt.

12. Verfahren gemäß einem der vorhergehenden Ansprüche, wobei die Kommunikation zwischen Backoffice (200) und Fahrzeug (100) und damit die Übertragung der Fahrzeuginformationen gemäß Verfahrensschritt (C), sowie die Übertragung des optimierten Höchstgeschwindigkeitsprofils (7') gemäß Verfahrensschritt (E) über einen nicht drahtgebundenen Kommunikationskanal erfolgt.

13. Vorrichtung (400) insbesondere zum Betrieb in einem Fahrzeug (100) aufweisend,
eine Empfangseinheit (401), konfiguriert ein Höchstgeschwindigkeitsprofil (7) zu empfangen,
eine Speichereinheit (402), konfiguriert das Höchstgeschwindigkeitsprofil (7) zu speichern,
einen Prozessor (403), konfiguriert zur Durchführung des Verfahrensschrittes (A) gemäß Anspruch 1,
eine Bedieneinheit (405), konfiguriert um eine manuelle Bedienung der Vorrichtung durch den Fahrzeugführer (300) zu ermöglichen,
eine Ausgabeeinheit (404), konfiguriert zur Ausgabe von Warnungen (2), falls die aktuelle Geschwindigkeit (vᵢₛₜ) des Fahrzeugs (100) größer ist als die Höchstgeschwindigkeit (vₘₐₓ) eines Streckenabschnitts, Handlungsanweisungen und Informationen an den Fahrzeugführer (300), sowie von Position und Geschwindigkeit des Fahrzeugs (100) und des dazugehörigen Zeitstempels zu einem Zeitpunkt der Warnung (2) an ein Backoffice (200).

14. Vorrichtung, aufweisend
eine Empfangseinheit, konfiguriert fahrzeugseitige Datensätze bestehend aus einer aktuellen Geschwindigkeit (vᵢₛₜ) und einer Position eines Fahrzeugs (100) zusammen mit einem dazugehörigen Zeitstempel zu einem Zeitpunkt der Ausgabe einer Warnung (2) zu empfangen,
eine Speichereinheit, konfiguriert die empfangenen fahrzeugseitigen Datensätze zu speichern,
einen Prozessor, konfiguriert zur Verarbeitung der gespeicherten Datensätze und zur Durchführung des Verfahrensschrittes (D) gemäß Anspruch 1,
eine Bedieneinheit, konfiguriert um eine manuelle Bedienung und Informationseingabe der Vorrichtung zu ermöglichen,
eine Ausgabeeinheit (404), konfiguriert zur Übermittlung eines optimierten Geschwindigkeitsprofils (7') an mindestens eine Vorrichtung (400) gemäß Anspruch 13.

15. System zur Umsetzung des Verfahrens gemäß Anspruch 1, aufweisend:
eine Vorrichtung gemäß Anspruch 13 und
eine Vorrichtung gemäß Anspruch 14.

16. Computerprogrammprodukt, umfassend Befehle, die bei der Ausführung des Programms durch einen Computer diesen veranlassen, die Verfahrensschritte (A), (B) und (C) gemäß des Verfahrens nach Anspruch 1 auszuführen.

17. Computerprogrammprodukt, umfassend Befehle, die bei der Ausführung des Programms durch einen Computer diesen veranlassen, die Verfahrensschritte (D) und (E) gemäß des Verfahrens nach Anspruch 1 auszuführen.

## Claims

1. Method of a speed assistance system for a vehicle (100), comprising the following procedural steps:
(A) comparing a current speed (vᵢₛₜ) of the vehicle (100) to the maximum speed (vₘₐₓ) stored in a maximum speed profile in a vehicle-side device,
(B) outputting a warning (2) to a vehicle driver (300) if the current speed (vᵢₛₜ) of the vehicle (100) is higher than the maximum speed (vₘₐₓ) of a route section,
(C) transmitting the position and speed of the vehicle (100) as well as the associated time stamp to a back office (200) at a time of the warning (2),
(D) optimising the maximum speed profile (7) on the basis of the received data,
(E) transmitting the optimised maximum speed profile (7') to the vehicle-side device.

2. Method according to claim 1, wherein the outputting of the warning (2) in the procedural step (B) is carried out by optical, haptic and/or acoustic signals.

3. Method according to any of the preceding claims, wherein the output warning (2) can be deactivated by the vehicle driver (300) in the procedural step (B).

4. Method according to any of the preceding claims, wherein the outputting of the warning (2) in the procedural step (B) is carried out in steps.

5. Method according to any of the preceding claims, wherein the warning (2) is generated on the basis of absolute thresholds and/or percentage thresholds and/or taking into account a braking curve characteristic.

6. Method according to any of the preceding claims, wherein the warning (2) is output if the predetermined permitted maximum speed (vₘₐₓ) is exceeded or predictively in front of danger points.

7. Method according to any of the preceding claims, wherein the method is extended by a procedural step for the long-term storage (3) of the values transmitted by the vehicle (100) in a memory unit of the wayside back office (200).

8. Method according to any of the preceding claims, wherein the procedural step (D) of optimising the maximum speed profiles (7) includes an identification of the danger areas.

9. Method according to any of the preceding claims, wherein the optimised maximum speed profile (7') is transmitted to several, in particular following behind, vehicles.

10. Method according to any of the preceding claims, wherein, in the case of autonomously travelling vehicles, the outputting of the warning (2) in the procedural step (B) is replaced by the initiation of an autonomous braking intervention (21) or, in the case of semi-autonomously travelling vehicles, an autonomous braking intervention (21) is initiated in addition to the output of the warning (2) to the vehicle driver (300).

11. Method according to any of the preceding claims, wherein the transmission of the optimised maximum speed profile (7') according to the procedural step (E) to the vehicle (100) is carried out either directly after the generation of the optimised maximum speed profile (7') or in accordance with a time schedule or in a place-dependent manner.

12. Method according to any of the preceding claims, wherein the communication between the back office (200) and the vehicle (100) and thus the transmission of the vehicle information according to the procedural step (C), as well as the transmission of the optimised maximum speed profile (7') according to the procedural step (E) are carried out via a non-wired communication channel.

13. Device (400), in particular for operation in a vehicle (100), having
a receiving unit (401) configured to receive a maximum speed profile (7),
a memory unit (402) configured to store the maximum speed profile (7),
a processor (403) configured to execute the procedural step (A) according to claim 1,
a control unit (405) configured to facilitate a manual control of the device by the vehicle driver (300),
an output unit (404) configured to output warnings (2) if the current speed (vᵢₛₜ) of the vehicle (100) is higher than the maximum speed (vₘₐₓ) of a route section, instructions and information to the vehicle driver (300), as well as to output the position and speed of the vehicle (100) and the associated time stamp to a back office (200) at a time of the warning (2).

14. Device, having
a receiving unit configured to receive vehicle-side data sets consisting of a current speed (vᵢₛₜ) and a position of a vehicle (100) together with an associated time stamp at a time of the outputting of a warning (2),
a storage unit configured to store the received vehicle-side data sets,
a processor configured to process the stored data sets and to execute the procedural step (D) according to claim 1,
a control unit configured to facilitate a manual control and information input of the device,
an output unit (404) configured to transmit an optimised speed profile (7') to at least one device (400) according to claim 13.

15. System for implementing the method according to claim 1, having:
a device according to claim 13 and
a device according to claim 14.

16. Computer programme product, comprising commands which prompt a computer when executing the programme to carry out the procedural steps (A), (B) and (C) of the method according to claim 1.

17. Computer programme product, comprising commands which prompt a computer when executing the programme to carry out the procedural steps (D) and (E) of the method according to claim 1.

## Revendications

1. Procédé d'un système d'assistance à la vitesse pour un véhicule (100) comportant les stades de procédé suivants :
(A) comparaison d'une vitesse (vᵢₛₜ) en cours du véhicule (100) à la vitesse (vₘₐₓ) maximum mise en mémoire dans un profil de vitesse maximum dans un dispositif embarqué sur le véhicule,
(B) envoi:d'une alerte (2) à un conducteur (300) du véhicule, si la vitesse (vᵢₛₜ) en cours du véhicule (100) est plus grande que la vitesse (vₘₐₓ) maximum sur un tronçon de voie,
(C) transmission de la position et de la vitesse du véhicule (100) ainsi que de l'horodatage, qui lui appartient, à un instant de l'alerte (2) à un backoffice (200),
(D) optimisation du profil (7) de vitesse maximum à l'aide des données reçues,
(E) transmission du profil (7') optimisé de vitesse maximum au dispositif embarqué sur le véhicule.

2. Procédé suivant la revendication 1, dans lequel l'envoi de l'alerte (2) dans le stade (B) du procédé s'effectue par des signaux optiques, haptiques et/ acoustiques.

3. Procédé suivant l'une des revendications précédentes, dans lequel l'alerte (2) envoyée dans le stade (B) du procédé peut être désactivée par le conducteur (300) du véhicule.

4. Procédé suivant l'une des revendications précédentes, dans lequel l'envoi de l'alerte (2) dans le stade (B) du procédé s'effectue par paliers.

5. Procédé suivant l'une des revendications précédentes, dans lequel on produit l'alerte (2) à l'aide de seuils absolus et/ou de seuils en pourcentages et/ou en incorporant une caractéristique de courbe de freinage.

6. Procédé suivant l'une des revendications précédentes, dans lequel on envoie l'alerte (2) si la vitesse (vₘₐₓ) maximum autorisée donnée à l'avance est dépassée ou, d'une manière prédictive, avant des points dangereux.

7. Procédé suivant l'une des revendications précédentes, dans lequel on étend le procédé d'un stade de mise en mémoire (3) de longue durée des valeurs transmises par le véhicule (100) dans une unité de mise en mémoire du backoffice (200) sur la voie.

8. Procédé suivant l'une des revendications précédentes, dans lequel le stade (D) du procédé de l'optimisation des profils (7) de vitesse maximum comporte une identification des zones dangereuses.

9. Procédé suivant l'une des revendications précédentes, dans lequel on transmet le profil (7') de vitesse maximum à plusieurs véhicules, notamment qui se suivent.

10. Procédé suivant l'une des revendications précédentes, dans lequel, dans le cas de véhicules autonomes, on remplace l'envoi de l'alerte (2), dans le stade (B) du procédé, par le début d'une intervention (21) autonome de freinage ou, dans le cas de véhicules partiellement autonomes, le début d'une intervention (21) autonome de freinage s'effectue en plus de l'envoi de l'alerte (2) au conducteur (300) du véhicule.

11. Procédé suivant l'une des revendications précédentes, dans lequel la transmission du profil (7') optimisé de vitesse maximum, suivant le stade (E) du procédé, au véhicule (100) s'effectue soit directement après la production du profil (7') optimisé de vitesse maximum, soit suivant un plan temporel, soit d'une façon liée au lieu.

12. Procédé suivant l'une des revendications précédentes, dans lequel la communication entre le backoffice (200) et le véhicule (100) et ainsi la transmission des informations concernant le véhicule suivant le stade (C) du procédé, ainsi que la transmission du profil (7') optimisé de vitesse maximum, suivant le stade (E) du procédé, s'effectue par un canal de communication sans fil.

13. Dispositif (400) destiné à fonctionner notamment dans un véhicule (100), comportant :
une unité (401) de réception, configurée pour recevoir un profil (7) de vitesse maximum,
une unité (402) de mémoire, configurée pour mettre en mémoire le profil (7) de vitesse maximum,
un processeur (403), configuré pour effectuer le stade (A) du procédé suivant la revendication 1,
une unité (405) de commande, configurée pour permettre une commande manuelle du dispositif par le conducteur (300) du véhicule,
une unité (404) d'émission, configurée pour envoyer des alertes (2), si la vitesse (vᵢₛₜ) en cours du véhicule (100) est plus grande que la vitesse (vₘₐₓ) maximum sur un tronçon de voie, des instructions de traitement et des informations au conducteur (300) du véhicule, ainsi que la position et la vitesse du véhicule (100) et l'horodatage, qui leur appartient, à un instant de l'alerte (2) à un backoffice (200).

14. Dispositif comportant
une unité de réception, configurée pour recevoir des ensembles de données de la part du véhicule, constitués d'une vitesse (vᵢₛₜ) en cours et d'une position du véhicule (100), ensemble avec un horodatage, qui leur appartient, à un instant de l'envoi d'une alerte (2),
une unité de mémoire, configurée pour mettre en mémoire les ensembles de données reçus de la part du véhicule,
un processeur, configuré pour traiter les ensembles de données mises en mémoire et pour effectuer le stade (D) du procédé suivant la revendication 1,
une unité de commande, configurée pour permettre une commande manuelle et une entrée d'information du dispositif,
une unité (404) d'émission, configurée pour transmettre un profil (7') optimisé de vitesse à au moins un dispositif (400) suivant la revendication 13.

15. Système de mise en œuvre du procédé suivant la revendication 1, comportant
un dispositif suivant la revendication 13 et
un dispositif suivant la revendication 14.

16. Produit de programme d'ordinateur comprenant des instructions, qui font que, lors de la réalisation du programme par un ordinateur, celles-ci exécutent les stades (A), (B) et (C) du procédé suivant le procédé de la revendication 1.

17. Produit de programme d'ordinateur comprenant des instructions, qui font que, lors de la réalisation du programme par un ordinateur, celles-ci exécutent les stades (D) et (E) du procédé suivant le procédé de la revendication 1.
